# EUROPEAN PATENT SPECIFICATION

(11) **EP 3 195 952 B1**
(45) Date of publication and mention of the grant of the patent: **08.04.2020**
(21) Application number: 16195883.0
(22) Date of filing: 27.10.2016
(51) Int. Cl.: B21F 1/00, B21F 3/02, B21F 35/00

(54) **OMNIDIRECTIONAL MANIPULATOR FOR USE WITH SPRING FORMING MACHINE**
OMNIDIREKTIONALER MANIPULATOR ZUR VERWENDUNG MIT FEDERFORMMASCHINE
MANIPULATEUR OMNIDIRECTIONNEL DESTINÉ À ÊTRE UTILISÉ AVEC UNE MACHINE DE FORMATION DE RESSORT

(30) Priority: 20.01.2016 TW 105200817 U
(43) Date of publication of application: 26.07.2017
(73) Proprietor: Union Precision Hardware Co., Ltd., Huizhou City, Guangdong (CN)
(72) Inventor: Yang, Yao Ming, Cambridge, CB11AH (GB); Hsin, Hua Yun, Cambridge, CB11AH (GB); Mao, Neng Wen, Cambridge, CB11AH (GB)
(74) Representative: Lang, Christian

(56) References cited:
- EP-A1- 0 124 845
- DE-A1-102011 085 005
- DE-C1- 10 215 047
- JP-A- H10 109 133
- US-A- 6 142 002
- US-A1- 2001 046 423
- US-A1- 2008 314 110
- US-A1- 2009 007 619

## Description

### (a) Technical Field of the Invention

The present invention relates generally to a spring forming machine, and more particularly to an omnidirectional manipulator for use with a spring forming machine US 6 142 002 A , on which the preamble of claim 1 is based, discloses such a manipulator.

### (b) Description of the Prior Art

A spring forming machine is a piece of machinery for making various types or models of springs. The manufacturing process is generally such that a feeding roller that is capable of clamping and holding a wire for making a spring, which will be referred to as a spring-making wire for simplicity, is used to feed the spring-making wire through a through hole formed in a front wall board of the machine to allow various tools that are mounted to the front wall board to approach and engage, in a sideway direction, the spring-making wire to conduct various operations, such as bending, twisting or looping, and cutting, in order to complete the manufacture of a spring. In addition, various programs are loaded in advance in a processor combined with the spring forming machine so that execution of these programs controls the wire feeding means and the tools mounted to the front wall board of the spring forming machine to conduct various operations, such as bending, twisting or looping, and cutting, which are necessary for different phases of the manufacturing operation, to thereby achieve the purposes of making springs of various types and models.

The above-discussed existing spring forming machine is fully capable of achieving the purpose of making various sorts of springs. However, the number of the tools that are mounted to the front wall board is limited and the tools are allowed to do linear movements on the front wall board so that the movements of the tools approaching the spring-making wire are generally of the same angle and direction, making it not possible to suit the needs for bending and twisting or looping in all directions during the manufacturing of springs. To cope with such a problem, spring forming machines that are capable of rotating the wires are available. Such a kind of spring forming machines, however, is expensive and may be incapable of performing desired operations due to the gauges of the sprig-making wires being small, so that such machines do not suit the contemporary needs for making diverse forms of springs.

### SUMMARY OF THE INVENTION

In view of the above, an object of the present invention is to provide an omnidirectional manipulator for spring forming machines, which is mountable to an existing spring forming machines to allow for three-dimensional movements of tools to suit the contemporary need for making diverse forms of springs.

To achieve the above and other objects, the present invention provides an omnidirectional manipulator according to claim 1.

In an embodiment, the first linear guideway of the omnidirectional manipulator for use with the spring forming machine comprises: a linear base, a screw rod, a slide seat, and a servomotor. The linear base comprises two rails that are substantially parallel to each other. The screw rod is rotatably mounted on the linear base and comprises a plurality of male threads. The slide seat is fit over the screw rod and comprises a plurality of female threads corresponding to and engaging with the male threads of the screw rod and a plurality of guide seats respectively corresponding to the two rails of the linear base such that the guide seats are respectively mounted on the two rails. The servomotor is fixed on the linear base and is coupled to and drives the screw rod to rotate so as to drive the slide seat to do linear movement along the two rails of the linear base.

In an embodiment, the servomotor of the first linear guideway of the omnidirectional manipulator for use with the spring forming machine is coupled to and drives the screw rod to rotate by means of a motor gear and a screw gear that mate each other so as to drive the slide seat to do linear movement along the two rails of the linear base.

In an embodiment, the servomotor of the first linear guideway of the omnidirectional manipulator for use with the spring forming machine is coupled to and drives the screw rod to rotate by means of a motor pulley, a belt, and a screw pulley that are operatively coupled to each other so as to drive the slide seat to do linear movement along the two rails of the linear base.

In an embodiment, the servomotor of the first linear guideway of the omnidirectional manipulator for use with the spring forming machine is coupled to and drives the screw rod to rotate by means of a coupling coupled thereto so as to drive the slide seat to do linear movement along the two rails of the linear base.

In an embodiment, the second linear guideway of the omnidirectional manipulator for use with the spring forming machine comprises: two rails, a slide seat, a screw rod, a screw seat, and a servomotor. The two rails are arrangement substantially parallel to each other. The slide seat comprises a plurality of guide seats respectively corresponding to the two rails so as to be respectively mounted on the two rails. The screw rod is rotatably mounted on the slide seat and comprises a plurality of male threads. The screw seat is fit over the screw rod and comprises a plurality of female threads corresponding to and engaging with the male threads of the screw rod. The servomotor is mounted on the slide seat and is coupled to and drives the screw rod to rotate so as to drive the slide seat to do linear movement along the two rails.

In an embodiment, the servomotor of the second linear guideway of the omnidirectional manipulator for use with the spring forming machine is coupled to and drives the screw rod to rotate by means of a coupling coupled thereto so as to drive the slide seat to do the linear movement along the two rails.

In an embodiment, the third linear guideway of the omnidirectional manipulator for use with the spring forming machine comprises: a linear base, a screw rod, a slide seat, and a servomotor. The linear base comprises two rails that are substantially parallel to each other. The screw rod is rotatably mounted on the linear base and comprises a plurality of male threads. The slide seat is fit over the screw rod and comprises a plurality of female threads corresponding to and engaging with the male threads of the screw rod and a plurality of guide seats respectively corresponding to the two rails of the linear base such that the guide seats are respectively mounted on the two rails. The servomotor is coupled to and drives the screw rod to rotate so as to drive the slide seat to do linear movement along the two rails of the linear base.

In an embodiment, the servomotor of the third linear guideway of the omnidirectional manipulator for use with the spring forming machine is coupled to and drives the screw rod to rotate by means of a coupling coupled thereto so as to drive the slide seat to do the linear movement along the two rails of the linear base.

According to the invention, the tool module of the omnidirectional manipulator for use with the spring forming machine comprises: a tool disc, an angled gear box, a first servomotor, and a second servomotor. The tool disc comprises at least one tool. The angled gear box comprises a tool transmission axle coupled to the tool disc. The first servomotor is coupled to the angled gear box to drive the tool transmission axle of the angled gear box so as to drive the tool disc to rotate about a first rotation axis. The second servomotor drives the angled gear box and the tool disc to collectively rotate about a second rotation axis. The first rotation axis and the second rotation axis are perpendicular to each other.

According to the invention, the first servomotor of the tool module of the omnidirectional manipulator for use with the spring forming machine drives a rotation transmission axle by means of a tool disc transmission gear set so as to drive the tool transmission axle of the angled gear box to have the tool disc rotate about the first rotation axis. The angled gear box can be an angled dual-output-axle gear box for simultaneously driving two tool discs to rotate about the first rotation axis.

According to the invention, the second servomotor of the tool module of the omnidirectional manipulator for use with the spring forming machine drives a second rotation transmission axle, which is arranged around an outer circumference of the rotation transmission axle and is concentric with the rotation transmission axle, by means of an arm joint transmission gear set so as to drive the angled gear box and the tool disc to collectively rotate about the second rotation axis.

In summary, the present invention provides an omnidirectional manipulator for use with a spring forming machine, which is mountable on an existing spring forming machine to allow for various tools carried on a tool module to move in a three-dimensional space to approach, at various angles, and engage a spring-making wire extending through a hole formed in a front wall board of the spring forming machine to conduct various operations at different angles, such as bending and twisting/looping, in order to suit the needs for making diverse forms of springs.

Further, a computer may be provided for use with an omnidirectional manipulator for spring forming machines, which supports an electric machine that is operable with absolute position for each axis so as to simplify the arrangement of proximity switches and allowing for setting any arbitrary position along each axis as an original point, and also allowing for storage of at least one thousand files. Further, the present invention provides an omnidirectional manipulator that is installable in spring forming machines of all brands and models so that the computer used can control conventional drivers and electric machines used in any existing spring forming machine so that there is no need to replace the existing electric machines and drivers for installation of the omnidirectional manipulator provided according to the present invention.

The foregoing objectives and summary provide only a brief introduction to the present invention. To fully appreciate these and other objects of the present invention as well as the invention itself, all of which will become apparent to those skilled in the art, the following detailed description of the invention and the claims should be read in conjunction with the accompanying drawings. Throughout the specification and drawings identical reference numerals refer to identical or similar parts.

Many other advantages and features of the present invention will become manifest to those versed in the art upon making reference to the detailed description and the accompanying sheets of drawings in which a preferred structural embodiment incorporating the principles of the present invention is shown by way of illustrative example.

### BRIEF DESCRIPTION OF THE DRAWINGS

FIG 1 is a perspective view showing a manipulator according to a first embodiment of the present invention mounted to a spring forming machine.
FIG 2 is a perspective view illustrating the manipulator of FIG 1 in an assembled form.
FIG 3 is an exploded view of the manipulator of FIG. 2.
FIG. 4 is an exploded view of a third linear slide rail of the manipulator of FIG 2.
FIG. 5 is an exploded view of a second linear slide rail of the manipulator of FIG 2.
FIG. 6 is an exploded view of a first linear slide rail of the manipulator of FIG 2.
FIG. 7 is an exploded view of a tool module of the manipulator of FIG 2.
FIG 8 is a perspective view, partly exploded, showing a manipulator according to a second embodiment of the present invention.
FIG 9 is another perspective view, partly exploded, showing the manipulator of FIG 8.
FIG 10 is a perspective view showing a manipulator according to a third embodiment of the present invention.

### DETAILED DESCRIPTION OF THE PREFERRED EMBODIMENTS

The following descriptions are exemplary embodiments only, and are not intended to limit the scope, applicability or configuration of the invention in any way. Rather, the following description provides a convenient illustration for implementing exemplary embodiments of the invention. Various changes to the described embodiments may be made in the function and arrangement of the elements described without departing from the scope of the invention as set forth in the appended claims.

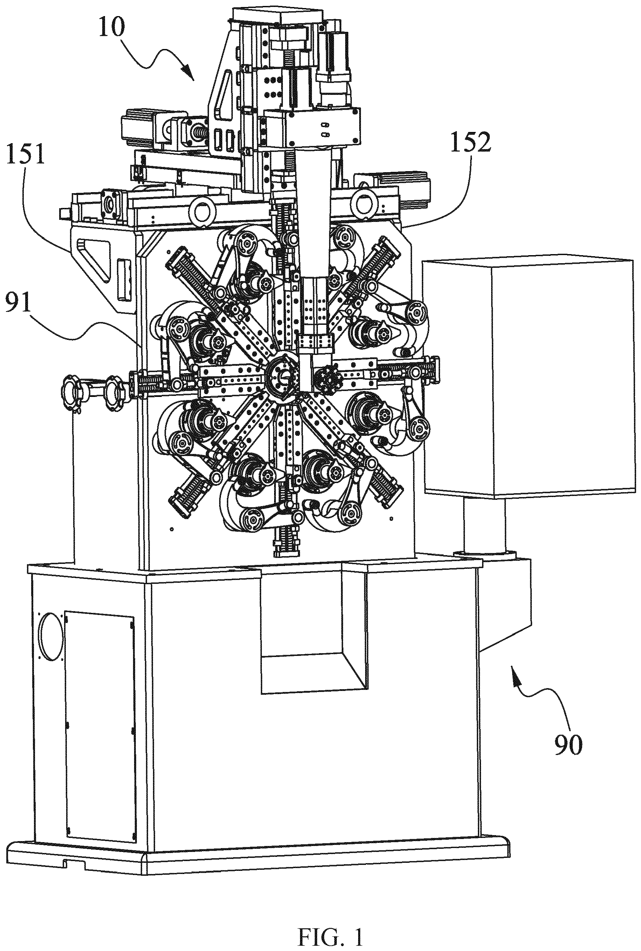

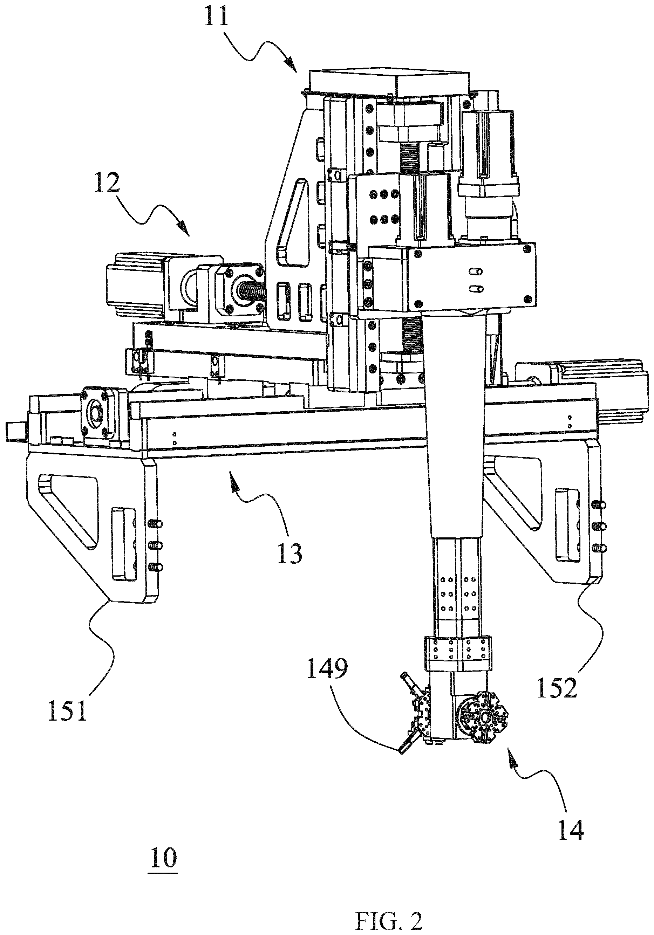

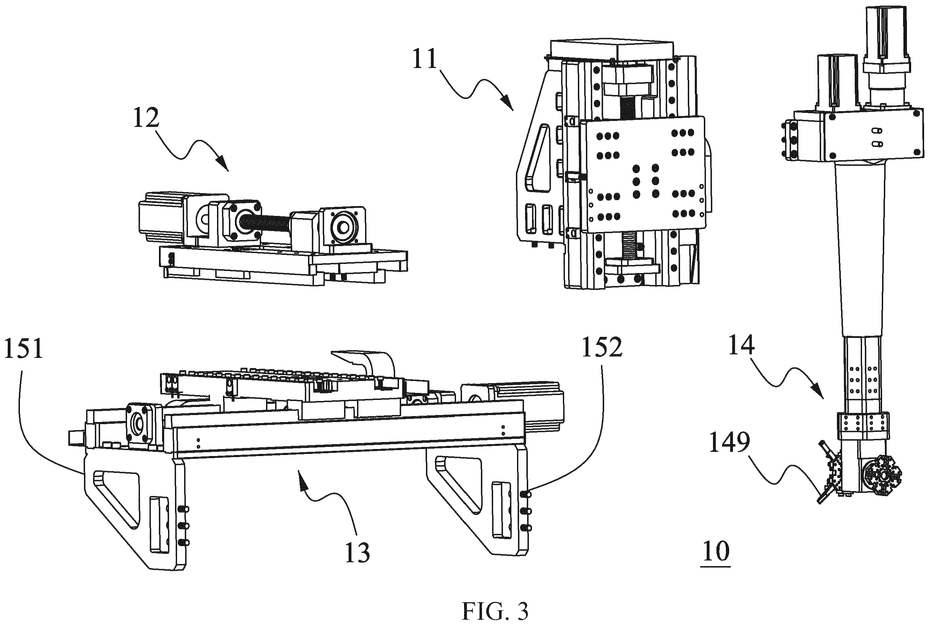

Referring to FIGS. 1-3, which are respectively a schematic view illustrating a manipulator according to a first embodiment of the present invention mounted on a spring forming machine and a perspective view and an exploded view of the present invention in a condition of being detached from the spring forming machine, as shown in the drawings, the manipulator 10 is mountable on a spring forming machine 90 by a mounting frame that is composed of a left brace 151 and a right brace 152 in order to allow tools 149 carried on a tool module 14 that is movable in a three-dimensional space to approach and engage a spring-making wire extending through a hole formed in a front wall board 91 of the spring forming machine 90 to carry out various operations at different angles, such as bending and twisting/looping.

In the drawings, in addition to the tool module 14 mentioned above, the manipulator 10 that is for use with a spring forming machine 90 also comprises linear guideways 11, 12, 13. The linear guideways 11 functions to carry and move the tool module 14 in a linear axis, such as Z axis (movement in an up-down direction in the drawings). The linear guideway 12 functions to carry and move the linear guideway 11 in a linear axis, such as Y axis (movement in a front-rear direction in the drawings). The linear guideway 13 functions to carry and move the linear guideway 12 in a linear axis, such as X axis (movement in a left-right direction in the drawings). The X axis, Y axis, and Z axis can be three coordinate axes that are perpendicular to each other.

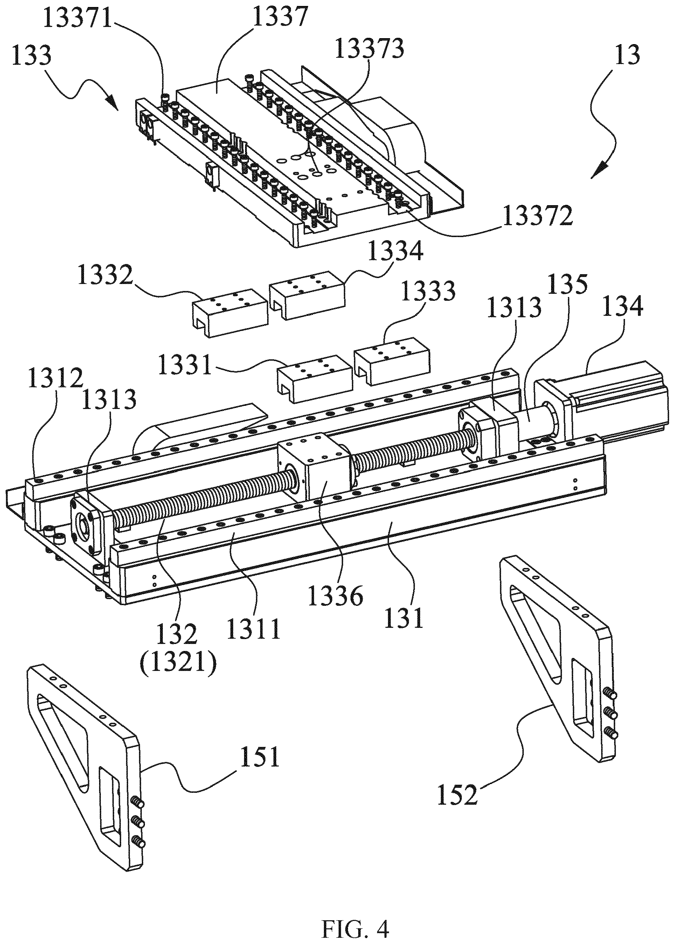

Referring to FIG 4, an exploded view is given to show the third linear guideway of the manipulator according to the first embodiment of the present invention. As shown in the drawing, the third linear guideway 13 of the manipulator 10 comprises a linear base 131, a screw rod 132, a slide seat 133, a servomotor 134, and a coupling 135.

The linear base 131 comprises two rails 1311, 1312 that are parallel to each other. The screw rod 132 is rotatably mounted on support seats 1313 at two ends of the linear base 131 comprises a plurality of male threads 1321. The slide seat 133 comprises a slide block 1336, a rail seat 1337, and guide seats 1331, 1332, 1333, 1334 that are securely fixed to each other. The slide block 1336 comprises a plurality of female threads corresponding to the male threads 1321 of the screw rod 132 and receives the screw rod 132 to extend through, in a threading engagement manner, the slide block 1336 for driving linear movement of the slide seat 133 that comprises the slide block 1336, the rail seat 1337, and the guide seats 1331, 1332, 1333, 1334.

Further, the guide seats 1331, 1333 are mounted on the rail 1311 and the guide seats 1332, 1334 are mounted on the rail 1312 and they comprise channels formed therein to respectively correspond to and mate with the rails 1311, 1312 so as to be movable along the two rails 1311, 1312 of the linear base 131. The servomotor 134 is fixed on the linear base 131 and has a rotation shaft that is coupled by the coupling 135 to the screw rod 132 for driving the screw rod 132 to rotate so as to drive the slide seat 133 to do linear movement along the two rails 1311, 1312 of the linear base 131.

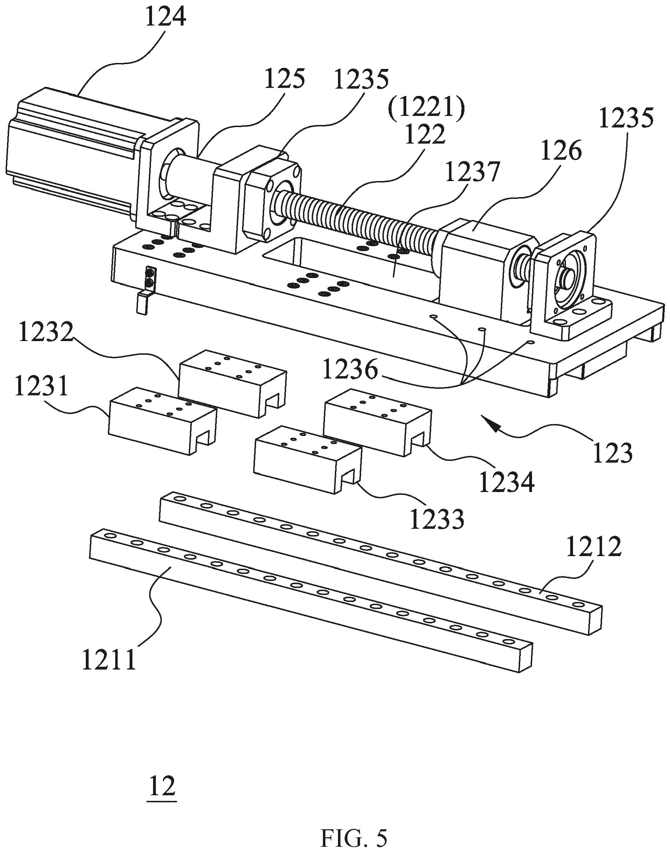

Referring to FIG 5, an exploded view is given to show the second linear guideway of the manipulator according to the first embodiment of the present invention. As shown in the drawing, the second linear guideway 12 of the manipulator 10 comprises rails 1211, 1212, a screw rod 122, a slide seat 123, a screw seat 126, a servomotor 124, and a coupling 125.

The rails 1211, 1212 are fixedly mounted, in a manner of being parallel to each other, to two side surfaces 13371, 13372 of the rail seat 1337 of the third linear guideway 13 at locations that are substantially perpendicular to the rails 1311, 1312 of the third linear guideway 13. The screw seat 126 is fit over and mounted to the screw rod 122 and comprises a plurality of female threads corresponding to and engaging with male threads 1221 of the screw rod 122 and has a bottom that extends through an opening 1237 of the slide seat 123 to be securely fixed to threaded holes 13373 formed in the rail seat 1337 of the third linear guideway 13 (see FIG 4).

The slide seat 123 comprises a plurality of guide seats 1231, 1232, 1233, 1234 corresponding to the rails 1211, 1212. The guide seats 1231, 1233 are mounted on the rail 1211 and the guide seats 1232, 1234 are mounted on the rail 1212 and they comprise channels formed therein to respectively correspond to and mate with the rails 1211, 1212 so as to be individually movable along the two rails 1211, 1212.

The screw rod 122 is rotatably supported on support seats 1235 at two ends of the slide seat 123 and comprises a plurality of male threads 1221. The servomotor 124 is fixed on the slide seat 123 and has a rotation shaft that is coupled by the coupling 125 to the screw rod 122 for driving the screw rod 122 to rotate so as to drive the slide seat 123, along with the servomotor 124 mounted thereto, to do linear movement along the two rails 1211, 1212.

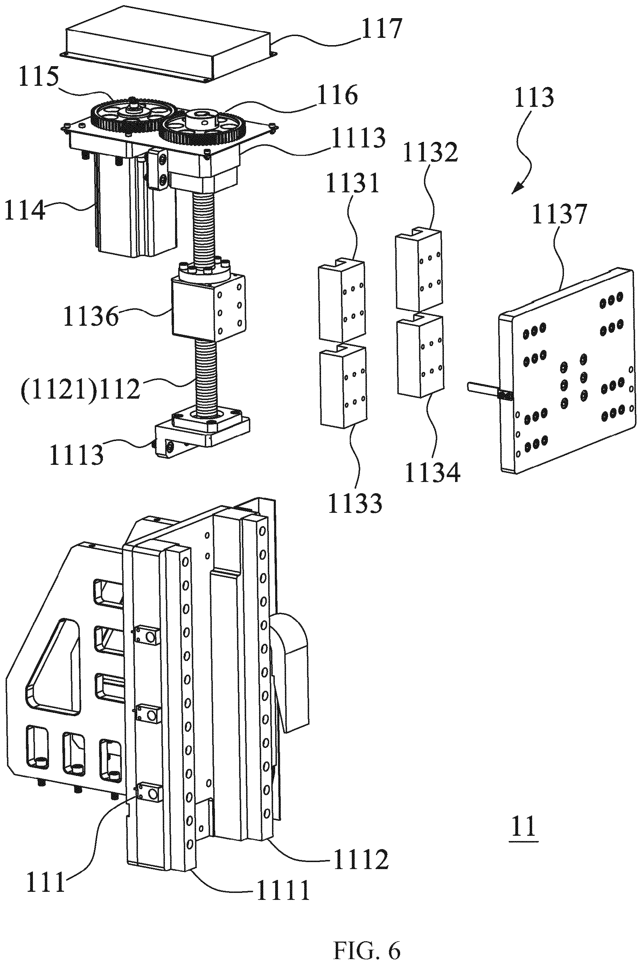

Referring to FIG 6, an exploded view is given to show the first linear guideway of the manipulator according to the first embodiment of the present invention. As shown in the drawing, the first linear guideway 11 of the manipulator 10 comprises a linear base 111, a screw rod 112, a slide seat 113, a servomotor 114, a motor gear 115, and a screw gear 116. A protection cover 117 is provided above and houses the motor gear 115 and the screw gear 116 for protection.

The linear base 111 is fixedly mounted to threaded holes 1236 formed in the slide seat 123 of the second linear guideway 12 (see FIG 5) and comprises two rails 1111, 1112 that are parallel to each other. The screw rod 112 is rotatably supported on support seats 1113 at two ends of the linear base 111 and comprises a plurality of male threads 1121. The slide seat 113 comprises a slide block 1136, a module seat 1137, and guide seats 1131, 1132, 1133, 1134. The slide block 1136 comprises a plurality of female threads corresponding to and engaging with the male threads 1121 of the screw rod 112 to allow the screw rod 112 to extend through, in a manner of being in engagement therewith, the slide block 1136 to drive the slide seat 113, which comprises the slide block 1136, the module seat 1137, and the guide seats 1131, 1132, 1133, 1134, to do linear movement.

Further, the guide seats 1131, 1133 are mounted on the rail 1111 and the guide seats 1132, 1134 are arranged on the rail 1112 and they comprise channels formed therein to respectively correspond to and mate with the rails 1111, 1112 so as to be movable along the two rails 1111, 1112 of the linear base 111. The servomotor 114 is fixed on the linear base 111 and is coupled to the screw rod 112 by means of inter-engagement between the motor gear 115 and the screw gear 116 to drive it to rotate so as to drive the slide seat 113 to do linear movement along the two rails 1111, 1112 of the linear base 111.

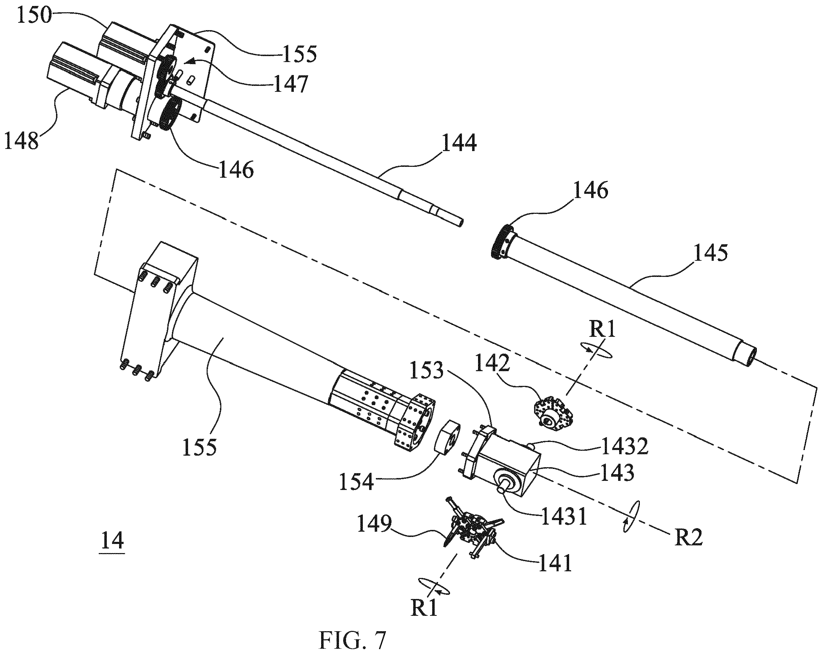

Referring to FIG 7, an exploded view is given to illustrate the tool module of the manipulator according to the first embodiment of the present invention. As shown in the drawing, the tool module 14 of the manipulator 10 for use with a spring forming machine 90 comprises: tool discs 141, 142, an angled dual-output-axle gear box 143, rotation transmission axles 144, 145, an arm joint transmission gear set 146, a tool disc transmission gear set 147, a servomotor 150, and a servomotor 148, which can be provided with for example a reducer, these being all mounted inside or outside a module housing 155. In this example, the servomotor 150 is not provided with a reducer, and thus, preferably, an angled dual-output-axle gear box 143 with a built-in reduction mechanism may be adopted to drive the tool discs 141, 142.

The tool disc 141 or 142 comprises at least one tool 149. In the example illustrated in the drawings, the tool disc 141 is provided with two tools 149 in each of a horizontal direction and a vertical direction; yet those skilled in the art may contemplate, based on the inventive idea of the present invention, the arrangement of tools may be varied according to the needs for an actual process of forming springs. The angled dual-output-axle gear box 143 comprises tool transmission axles 1431, 1432 respectively coupled to the tool discs 141, 142. The servomotors 148, 150 are fixed on the module housing 155. The servomotor 148 has a rotation shaft, which drives, via the arm joint transmission gear set 146, the rotation transmission axle 145 that has an end rotatably mounted to the rotation transmission axle 144 and an opposite end rotatably mounted to the module housing 155 such that a tool disc bearing seat 154 having two sides respectively coupled to the rotation transmission axle 145 and the gear box mounting seat 153 may drive the angled dual-output-axle gear box 143 and the tool discs 141, 142 to collectively rotate about a rotation axis R2.

The servomotor 150 has a rotation shaft that drives, via the tool disc transmission gear set 147, the rotation transmission axle 144 that has an end rotatably mounted to the module housing 155 and an opposite end rotatably mounted inside the rotation transmission axle 145 that is hollow and coaxial with the rotation transmission axle 145 in order to drive the angled dual-output-axle gear box 143 that is coupled to the rotation transmission axle 144 to have the tool transmission axles 1431, 1432 respectively drive the tool discs 141, 142 to rotate about a rotation axis R1. The rotation axes R1 and R2 are perpendicular to each other, as shown in the drawings.

As such, the manipulator 10 is mountable to an existing spring forming machine 90 to allow all sorts of tools 149 carried on the tool module 14 to move, in a three-dimensional space, to approach and engage a spring-making wire extending through a hole formed in a front wall board 91 of the spring forming machine 90 to carry out various operations at different angles, such as bending and twisting/looping. Thus, even just one tool 149 is involved, helical springs of different angles can be manufactured and damages caused by improper twisting in making small-gauge springs with the conventional spring forming machine 90 may be eliminated; and flexibility is realized for use with tools 149 arranged at 90 degrees with respect to each other to achieve different functions. Further, due to the rotatability of the tool module 14, one single tool 149, which is provided therein with various wire openings/slots, may be used for the manufacture of springs of various wire gauges.

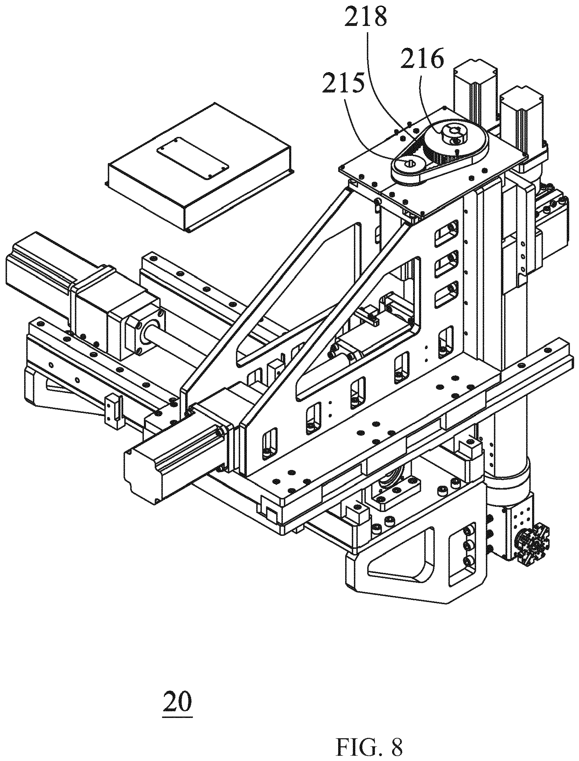

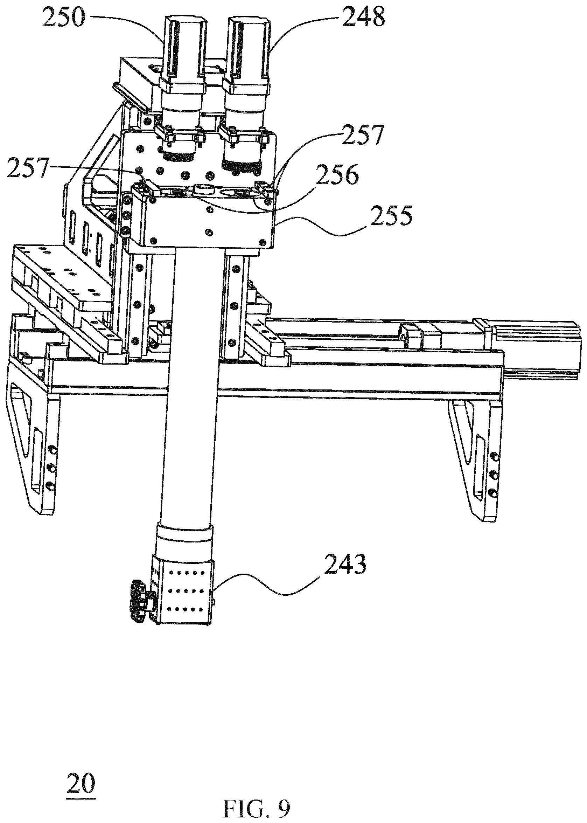

Referring to FIGS. 8 and 9, partly exploded views of a manipulator according to a second embodiment of the present invention are shown. The structure of the manipulator 20 according to the instant embodiment is generally identical to that of the first embodiment illustrated above, repeated description will be omitted here, and only the difference between the two embodiments will be described. Firstly, the arrangement of transmission shown in FIG 6, where the servomotor 114 of the first linear guideway 11 drives the screw rod 112, is modified in the example of FIG 8 by being substituted by an arrangement involving a motor pulley 215, a belt 218, and a screw pulley 216, which are mutually coupled to each other to drive the screw rod to rotate so as to drive the slide seat to do linear movement along the two rails of the linear base.

Secondly, as shown in FIG 9, the servomotor 150 that is illustrated in FIG 7 is replaced by a servomotor 250 that comprises a reducer built therein and the angled dual-output-axle gear box 143 shown in FIG 7 that involves a reduction mechanism is correspondingly replaced by an angled dual-output-axle gear box that does not comprise a reduction mechanism, or be alternatively replaced by angled single-output-axle gear box 243 that does not comprise a reduction mechanism as shown in the drawing. Further, to facilitate mounting and adjustment of the servomotors 248, 250, in the instant embodiment, the servomotors 248, 250 are respectively mounted in two elliptic holes 256 formed in the module housing 255 and are respectively arranged in combination with adjustment bolts 257 arranged at sides of the servomotors 248, 250 for adjusting and fixing the mounting positions of the servomotors 248, 250.

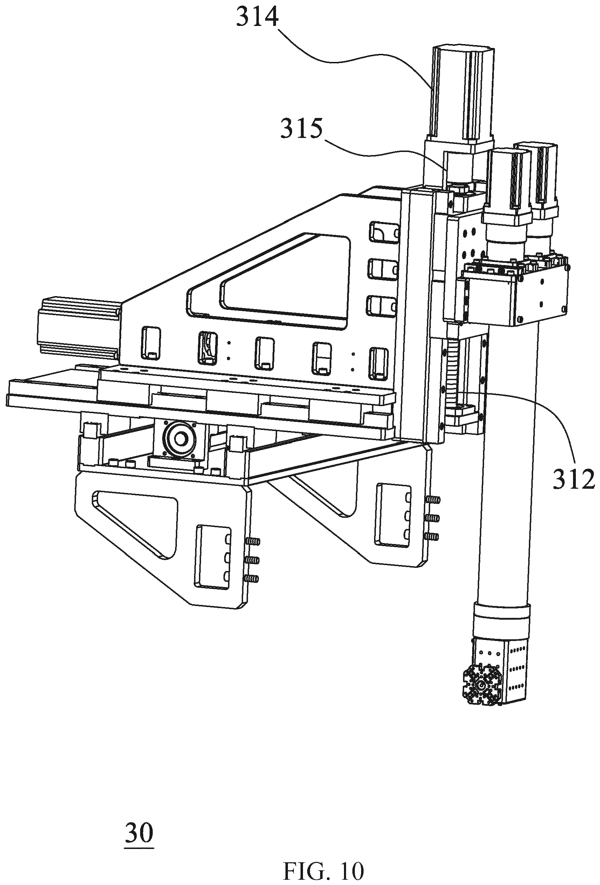

Referring to FIG 10, a perspective view is given to illustrate a manipulator according to a third embodiment of the present invention. The structure of the manipulator 30 according to the instant embodiment is generally identical to that of the second embodiment illustrated above, repeated description will be omitted here, and a difference therebetween is that transmission of a servomotor 314 in the instant embodiment is achieved with a coupling 315 connected thereto for driving a screw rod 312 to rotate thereby driving the slide seat to do linear movement along the two rails of the linear base.

It will be understood that each of the elements described above, or two or more together may also find a useful application in other types of methods differing from the type described above.

While certain novel features of this invention have been shown and described and are pointed out in the annexed claim, it is not intended to be limited to the details above, since it will be understood that various omissions, modifications, substitutions and changes in the forms and details of the device illustrated and in its operation can be made by those skilled in the art without departing in any way from the claims of the present invention.

## Claims

1. An omnidirectional manipulator, adapted to be used with a spring forming machine (90), and comprising:
a tool module (14) comprising a tool disc (141, 142), which comprises at least one tool (149);
a first linear guideway (11), which supports, in a manner of being mounted thereon, and drives the tool module (14) to move along a first linear axis;
a second linear guideway (12), which supports, in a manner of being mounted thereon, and drives the first linear guideway (11) to move along a second linear axis; and
a third linear guideway (13), which supports, in a manner of being mounted thereon, and drives the second linear guideway (12) to move along a third linear axis;
wherein the first linear axis, the second linear axis, and the third linear axis are perpendicular to one another,
**characterized in that**
the tool module (14) comprises:
an angled gear box (143), which comprises a tool transmission axle (1431, 1432) coupled to the tool disc (141, 142);
a first servomotor (150), which is coupled to the angled gear box (143) to drive the tool transmission axle (1431, 1432) so as to drive the tool disc (141, 142) to rotate about a first rotation axis (R1); and
a second servomotor (148), which drives the angled gear box (143) and the tool disc (141, 142) to collectively rotate about a second rotation axis (R2);
wherein the first rotation axis (R1) and the second rotation axis (R2) are perpendicular to each other,
wherein the first servomotor (150) drives a rotation transmission axle (144) by means of a tool disc transmission gear (147) set so as to drive the tool transmission axle (1431, 1432) to have the tool disc (141, 142) rotate about the first rotation axis (R1); and
wherein the second servomotor (148) drives a second rotation transmission axle (145), which is arranged around an outer circumference of the rotation transmission axle (144) and is concentric with the rotation transmission axle (144), by means of an arm joint transmission gear set (146) so as to drive the angled gear box (143) and the tool disc (141, 142) to collectively rotate about the second rotation axis (R2),
and wherein the omnidirectional manipulator comprises a mounting frame and is mountable on a spring forming machine (90) by the mounting frame, the mounting frame comprising a left brace (151) and a right brace (152) that support, in use, the omnidirectional manipulator on the spring forming machine (90) in such a way that the tool module (14) is movable in a three-dimensional space to approach and engage a spring-making wire extending through a hole formed in a front wall board (91) of the spring forming machine (90) to carry out operations at different angles.

2. The omnidirectional manipulator according to claim 1, wherein the first linear guideway (11) comprises:
a linear base (111), which comprises two rails (1111, 1112) that are substantially parallel to each other;
a screw rod (112), which is rotatably mounted on the linear base (111) and comprises a plurality of male threads (1121);
a slide seat (113), which is fit over the screw rod (112) and comprises a plurality of female threads corresponding to and engaging with the male threads (1121) of the screw rod (112) and a plurality of guide seats (1131, 1132, 1133, 1134) respectively corresponding to the two rails (1111, 1112) of the linear base (111) such that the guide seats (1131, 1132, 1133, 1134) are respectively mounted on the two rails (1111, 1112); and
a servomotor (114, 314), which is fixed on the linear base (111) and is coupled to and drives the screw rod (112, 312) to rotate so as to drive the slide seat (113) to do linear movement along the two rails (1111, 1112) of the linear base (111).

3. The omnidirectional manipulator according to claim 2, wherein the servomotor (114) is coupled to and drives the screw rod (112) to rotate by means of a motor gear (115) and a screw gear (116) that mate each other so as to drive the slide seat (113) to do the linear movement along the two rails (1111, 1112) of the linear base (111).

4. The omnidirectional manipulator according to claim 2, wherein the servomotor (114) is coupled to and drives the screw rod (112) to rotate by means of a motor pulley (215), a belt (218), and a screw pulley (216) that are operatively coupled to each other so as to drive the slide seat (113) to do the linear movement along the two rails (1111, 1112) of the linear base (111).

5. The omnidirectional manipulator according to claim 2, wherein the servomotor (314) is coupled to and drives the screw rod (312) to rotate by means of a coupling (315) coupled thereto so as to drive the slide seat (113) to do the linear movement along the two rails (1111, 1112) of the linear base (111).

6. The omnidirectional manipulator according to claim 1, wherein the second linear guideway (12) comprises:
two rails (1211, 1212), which are arrangement substantially parallel to each other;
a slide seat (123), which comprises a plurality of guide seats (1231, 1232, 1233, 1234) respectively corresponding to the two rails (1211, 1212) such that the guide seats (1231, 1232, 1233, 1234) are respectively mounted on the two rails (1211, 1212);
a screw rod (122), which is rotatably mounted on the slide seat (123) and comprises a plurality of male threads (1221);
a screw seat (126), which is fit over the screw rod (122) and comprises a plurality of female threads corresponding to and engaging with the male threads (1221) of the screw rod (122); and
a servomotor (124), which is mounted on the slide seat (123) and is coupled to and drives the screw rod (122) to rotate so as to drive the slide seat (123) to do linear movement along the two rails (1211, 1212).

7. The omnidirectional manipulator according to claim 6, wherein the servomotor (124) is coupled to and drives the screw rod (122) to rotate by means of a coupling (125) coupled thereto so as to drive the slide seat (123) to do the linear movement along the two rails (1211, 1212).

8. The omnidirectional manipulator according to claim 1, wherein the third linear guideway (13) comprises:
a linear base (131), which comprises two rails (1311, 1312) that are substantially parallel to each other;
a screw rod (132), which is rotatably mounted on the linear base (131) and comprises a plurality of male threads (1321);
a slide seat (133), which is fit over the screw rod (132) and comprises a plurality of female threads corresponding to and engaging with the male threads (1321) of the screw rod (132) and a plurality of guide seats (1331, 1332, 1333, 1334) respectively corresponding to the two rails (1311, 1321) of the linear base (131) such that the guide seats (1331, 1332, 1333, 1334) are respectively mounted on the two rails (1311, 1312); and
a servomotor (134), which is fixed on the linear base (131) and is coupled to and drives the screw rod (132) to rotate so as to drive the slide seat (133) to do linear movement along the two rails (1311, 1312) of the linear base (131).

9. The omnidirectional manipulator according to claim 8, wherein the servomotor (134) is coupled to and drives the screw rod (132) to rotate by means of a coupling (135) coupled thereto so as to drive the slide seat (133) to do the linear movement along the two rails (1311, 1312) of the linear base (131).

10. The omnidirectional manipulator according to claim 1, wherein the angled gear box (143) is an angled dual-output-axle gear box, which drives two tool discs (141, 142) to rotate about the first rotation axis (R1).

## Patentansprüche

1. Omnidirektionaler Manipulator, der zur Verwendung mit einer Federformmaschine (90) ausgelegt ist und umfasst:
ein Werkzeugmodul (14), das eine Werkzeugscheibe (141, 142) umfasst, die zumindest ein Werkzeug (149) umfasst,
eine erste lineare Führungsbahn (11), die das Werkzeugmodul (14) in einer Weise, in der es daran montiert ist, trägt und es antreibt, sich entlang einer ersten linearen Achse zu bewegen,
eine zweite lineare Führungsbahn (12), die die erste lineare Führungsbahn (11), in einer Weise, in der sie daran montiert ist, stützt und sie antreibt, sich entlang einer zweiten linearen Achse zu bewegen, und
eine dritte lineare Führungsbahn (13), die die zweite lineare Führungsbahn (12), in einer Weise, in der sie daran montiert ist, stützt und sie antreibt, sich entlang einer dritten linearen Achse zu bewegen,
wobei die erste lineare Achse, die zweite lineare Achse und die dritte lineare Achse senkrecht zueinander stehen,
**dadurch gekennzeichnet, dass**
das Werkzeugmodul (14) umfasst:
ein Winkelgetriebe (143), das eine Werkzeugübertragungsachse (1431, 1432) aufweist, die mit der Werkzeugscheibe (141, 142) gekoppelt ist,
einen ersten Servomotor (150), der mit dem Winkelgetriebe (143) gekoppelt ist, um die Werkzeugübertragungsachse (1431, 1432) anzutreiben, um die Werkzeugscheibe (141, 142) anzutreiben, sich um eine erste Drehachse (R1) zu drehen, und
einen zweiten Servomotor (148), der das Winkelgetriebe (143) und die Werkzeugscheibe (141, 142) antreibt, um sich gemeinsam um eine zweite Drehachse (R2) zu drehen,
wobei die erste Drehachse (R1) und die zweite Drehachse (R2) senkrecht zueinander stehen,
wobei der erste Servomotor (150) eine Rotationsübertragungsachse (144) mittels eines Werkzeugscheibenübertragungsgetriebes (147) antreibt, um die Werkzeugübertragungsachse (1431, 1432) anzutreiben, um die Werkzeugscheibe (141, 142) um die erste Drehachse (R1) zu drehen, und
wobei der zweite Servomotor (148) eine zweite Rotationsübertragungsachse (145), die um einen Außenumfang der Rotationsübertragungsachse (144) herum angeordnet ist und konzentrisch zu der Rotationsübertragungsachse (144) ist, mittels eines Armgelenk-Übertragungsgetriebesatzes (146) antreibt, um das Winkelgetriebe (143) und die Werkzeugscheibe (141, 142) so anzutreiben, dass sie sich gemeinsam um die zweite Drehachse (R2) drehen,
und wobei der omnidirektionale Manipulator einen Montagerahmen umfasst und durch den Montagerahmen an einer Federformmaschine (90) montiert werden kann, wobei der Montagerahmen eine linke Abstützung (151) und eine rechte Abstützung (152) umfasst, die im Gebrauch den omnidirektionalen Manipulator auf eine Weise an der Federformmaschine (90) tragen, dass das Werkzeugmodul (14) in einem dreidimensionalen Raum bewegbar ist, um sich einem Draht für die Herstellung einer Feder, der sich durch ein Loch erstreckt, das in einer vorderen Wandplatte (91) einer Federformmaschine (90) ausgebildet ist, anzunähern und in diesen zu greifen, um in verschiedenen Winkeln Arbeitsschritte auszuführen.

2. Omnidirektionaler Manipulator gemäß Anspruch 1, bei welchem die erste lineare Führungsbahn (11) umfasst:
eine lineare Basis (111), die zwei Schienen (1111, 1112) umfasst, die im Wesentlichen parallel zueinander sind,
eine Schraubenstange (112), die drehbar an der linearen Basis (111) angeordnet ist und eine Vielzahl von Außengewinden (1121) autweist,
einen Schiebesitz (113), der über die Schraubenstange (112) gepasst ist und eine Vielzahl an Innengewinden, die den Außengewinden (1121) der Schraubenstange (112) entsprechen und in diese eingreifen, und eine Vielzahl an Führungssitzen (1131, 1132, 1133, 1134) umfasst, die entsprechend den zwei Schienen (1111, 1112) der linearen Basis (111) entsprechen, so dass die Führungssitze (1131, 1132, 1133, 1134) entsprechend auf den zwei Schienen (1111, 1112) montiert sind, und
einen Servomotor (114, 314), der an der linearen Basis (111) befestigt ist und mit der Schraubenstange (112, 312) gekoppelt ist und diese antreibt, um sich zu drehen, um den Schiebesitz (113) anzutreiben, um eine lineare Bewegung entlang der zwei Schienen (1111, 1112) der linearen Basis (111) auszuführen.

3. Omnidrektionale Manipulator gemäß Anspruch 2, bei welchem der Servomotor (114) mit der Schraubenstange (112) gekoppelt ist und diese antreibt, um sich mittels eines Motorgetriebes (115) und eines Schraubengetriebes (116) zu drehen, die zusammenpassen, um den Schiebesitz (113) antreiben, um die lineare Bewegung entlang der beiden Schienen (1111, 1112) der linearen Basis (111) auszuführen.

4. Omnidirektionale Manipulator gemäß Anspruch 2, bei welchem der Servomotor (114) mit der Schraubenstange (112) gekoppelt ist und diese antreibt, um sich mittels einer Motorriemenscheibe (215), eines Riemens (218) und einer Schraubenscheibe (216) zu drehen. die betriebsmäßig miteinander gekoppelt sind, um den Schiebesitz (113) anzutreiben, um die lineare Bewegung entlang der zwei Schienen (1111, 1112) der linearen Basis (111) auszuführen.

5. Omnidirektionale Manipulator gemäß Anspruch 2, bei welchem der Servomotor (314) mit der Schraubenstange (312) gekoppelt ist und diese antreibt, um mittels einer Kupplung (315) zu drehen, die damit gekoppelt ist, um den Schiebesitz (113) anzutreiben, die lineare Bewegung entlang der beiden Schienen (1111, 1112) der linearen Basis (111) auszuführen.

6. Omnidirektionale Manipulator gemäß Anspruch 1, bei welchem die zweite lineare Führungsbahn (12) umfasst:
zwei Schienen (1211, 1212), die im Wesentlichen parallel zueinander angeordnet sind,
einen Schiebesitz (123), der eine Vielzahl an Führungssitzen (1231, 1232, 1233, 1234) aufweist, die entsprechend den zwei Schienen (1211, 1212) entsprechen, so dass die Führungssitze (1231, 1232, 1233, 1234) entsprechend auf den beiden Schienen (1211, 1212) montiert sind,
eine Schraubenstange (122), die drehbar an dem Schiebesitz (123) angeordnet ist und eine Vielzahl an Außengewinden (1221) aufweist,
einen Schraubensitz (126), der über der Schraubenstange (122) sitzt und eine Vielzahl an Innengewinden aufweist, die den Außengewinden (1221) der Schraubenstange (122) entsprechen und mit diesen in Eingriff stehen,
und einen Servomotor (124), der an dem Schiebesitz (123) angebracht ist und mit der Schraubenstange (122) gekoppelt ist und diese antreibt, um sich zu drehen, um den Schiebesitz (123) anzutreiben, eine lineare Bewegung entlang der zwei Schienen (1211, 1212) auszuführen.

7. Omnidirektionale Manipulator gemäß Anspruch 6, bei welchem der Servomotor (124) mit der Schraubenstange (122) gekoppelt ist und diese antreibt, um mittels einer Kupplung (125) zu drehen, die damit gekoppelt ist, um den Schiebesitz (123) anzutreiben, um die lineare Bewegung entlang der beiden Schienen (1211, 1212) auszuführen.

8. Omnidirektionale Manipulator gemäß Anspruch 1, bei welchem die dritte lineare Führungsbahn (13) umfasst:
eine lineare Basis (131), die zwei Schienen (1311, 1312) umfasst, die im Wesentlichen parallel zueinander sind,
eine Schraubenstange (132), die drehbar an der linearen Basis (131) angeordnet ist und eine Vielzahl an Außengewinden (1321) aufweist,
einen Schiebesitz (133), der über die Schraubenstange (132) gepasst ist und eine Vielzahl an Innengewinden, die den Außengewinden (1321) der Schraubenstange (132) entsprechen und in diese greifen, und eine Vielzahl an Führungssitzen (1331, 1332, 1333, 1334) umfasst, die entsprechend den zwei Schienen (1311, 1321) der linearen Basis (131) entsprechen, so dass die Führungssitze (1331, 1332, 1333, 1334) entsprechend auf den zwei Schienen (1311, 1312) montiert sind,
und einen Servomotor (134), der an der linearen Basis (131) befestigt ist und mit der Schraubenstange (132) gekoppelt ist und diese antreibt, um sich zu drehen, um den Schiebesitz (133) anzutreiben, eine lineare Bewegung entlang der zwei Schienen (1311, 1312) der linearen Basis (131) auszuführen.

9. Omnidirektionale Manipulator gemäß Anspruch 8, bei welchem der Servomotor (134) mit der Schraubenstange (132) gekoppelt ist und diese antreibt, um sich mittels einer Kupplung (135) zu drehen, die damit gekoppelt ist, um den Schiebesitz (133) anzutreiben, um die lineare Bewegung entlang der beiden Schienen (1311, 1312) der linearen Basis (131) auszuführen.

10. Omnidirektionale Manipulator gemäß Anspruch 1, bei welchem das Winkelgetriebe (143) ein abgewinkeltes Doppelausgangsachsgetriebe ist, das zwei Werkzeugscheiben (141, 142) antreibt, um sich um die erste Drehachse (R1) zu drehen.

## Revendications

1. Manipulateur omnidirectionnel qui est à même d'être utilisé avec une machine de formation de ressorts (90) et comprenant:
un module d'outil (14) comprenant un disque d'outil (141, 142) qui comprend au moins un outil (149);
une première voie de guidage linéaire (11) qui supporte, de manière à être monté dessus, et entraîne le module d'outil (14) pour le déplacer le long d'un premier axe linéaire;
une deuxième voie de guidage linéaire (12) qui supporte, de manière à être montée dessus, et entraîne la première voie de guidage linéaire (11) pour la déplacer le long d'un deuxième axe linéaire; et
une troisième voie de guidage linéaire (13) qui supporte, de manière à être montée dessus, et entraîne la deuxième voie de guidage linéaire (12) pour la déplacer le long d'un troisième axe linéaire;
dans lequel le premier axe linéaire, le deuxième axe linéaire et le troisième axe linéaire sont perpendiculaires l'un à l'autre,
**caractérisé en ce que**
le module d'outil (14) comprend:
un train d'engrenage angulaire (143) qui comprend un essieu de transmission d'outil (1431, 1432) couplé au disque d'outil (141, 142);
un premier servomoteur (150) qui est couplé au train d'engrenage angulaire (143) pour entraîner l'essieu de transmission d'outil (1431, 1432) de manière à entraîner le disque d'outil (141, 142) en rotation autour d'un premier axe de rotation (R1); et
un second servomoteur (148) qui entraîne le train d'engrenages angulaire (143) et le disque d'outil (141, 142) en rotation collective autour d'un deuxième axe de rotation (R2);
dans lequel le premier axe de rotation (R1) et le deuxième axe de rotation (R2) sont perpendiculaires l'un à l'autre,
dans lequel le premier servomoteur (150) entraîne un essieu de transmission de rotation (144) au moyen d'un renvoi de transmission de disque d'outil (147) réglé de manière à entraîner l'essieu de transmission d'outil (1431, 1432) pour faire tourner le disque d'outil (141, 142) autour du premier axe de rotation (R1); et
dans lequel le second servomoteur (148) entraîne un second essieu de transmission de rotation (145) qui est agencé autour d'une circonférence externe de l'essieu de transmission de rotation (144) et est concentrique avec l'essieu de transmission de rotation (144), au moyen d'un ensemble d'engrenages de transmission de jonction de bras (146) de manière à entraîner le train d'engrenage angulaire (143) et le disque d'outil (141, 142) en rotation collective autour du deuxième axe de rotation (R2),
et dans lequel le manipulateur omnidirectionnel comprend un châssis de montage et peut être monté sur une machine de formation de ressort (90) par le châssis de montage, le châssis de montage comprenant un tirant de gauche (151) et un tirant de droite (152) qui supportent en service le manipulateur omnidirectionnel sur la machine de formation de ressort (90) de sorte que le module d'outil (14) soit mobile dans un espace tridimensionnel pour se rapprocher et s'engager sur un fil métallique de fabrication de ressort s'étendant à travers un trou formé dans une plaque de paroi avant (91) de la machine de formation de ressort (90) pour effectuer des opérations sous différents angles.

2. Manipulateur omnidirectionnel selon la revendication 1, dans lequel la première voie de guidage linéaire (11) comprend:
une base linéaire (111) qui comprend deux rails (1111, 1112) qui sont sensiblement parallèles l'un à l'autre;
une tige filetée (112) qui est montée à rotation sur la base linéaire (111) et comprend une pluralité de filets mâles (1121);
un siège coulissant (113) qui est ajusté sur la tige filetée (112) et comprend une pluralité de filets femelles correspondant aux filets mâles (1121) de la tige filetée (112) et en prise avec ceux-ci et une pluralité de sièges de guidage (1131, 1132, 1133, 1134) correspondant respectivement aux deux rails (1111, 1112) de la base linéaire (111) de sorte que les sièges de guidage (1131, 1132, 1133, 1134) soient respectivement montés sur les deux rails (1111, 1112); et
un servomoteur (114, 314) qui est fixé sur la base linéaire (111) et est couplé à la tige filetée (112, 312) qu'il entraîne pour la faire tourner afin d'entraîner le siège coulissant (113) à effectuer un mouvement linéaire le long des deux rails (1111, 1112) de la base linéaire (111).

3. Manipulateur omnidirectionnel selon la revendication 2, dans lequel le servomoteur (114) est couplé à la tige filetée (112) qu'il entraîne en rotation au moyen d'une roue dentée motrice (115) et d'une roue dentée filetée (116) qui s'engagent l'une l'autre de manière à entraîner le siège coulissant (113) à effectuer le mouvement linéaire le long des deux rails (1111, 1112) de la base linéaire (111).

4. Manipulateur omnidirectionnel selon la revendication 2, dans lequel le servomoteur (114) est couplé à la tige filetée (112) qu'il entraîne en rotation au moyen d'une poulie motrice (215), d'une courroie (218) et d'une poulie filetée (216) qui sont couplées en service l'une à l'autre de manière à entraîner le siège coulissant (113) à effectuer le mouvement linéaire le long des deux rails (1111, 1112) de la base linéaire (111).

5. Manipulateur omnidirectionnel selon la revendication 2, dans lequel le servomoteur (314) est couplé à la tige filetée (312) qu'il entraîne en rotation au moyen d'un couplage (315) qui lui est couplé afin d'entraîner le siège coulissant (113) à effectuer le mouvement linéaire le long des deux rails (1111, 1112) de la base linéaire (111).

6. Manipulateur omnidirectionnel selon la revendication 1, dans lequel la deuxième voie de guidage linéaire (12) comprend:
deux rails (1211, 1212) qui sont agencés de manière sensiblement parallèle l'un à l'autre;
un siège coulissant (123) qui comprend une pluralité de sièges de guidage (1231, 1232, 1233, 1234) correspondant respectivement aux deux rails (1211, 1212) de sorte que les sièges de guidage (1231, 1232, 1233, 1234) soient respectivement montés sur les deux rails (1211, 1212);
une tige filetée (122) qui est montée à rotation sur le siège coulissant (123) et comprend une pluralité de filets mâles (1221);
un siège taraudé (126) qui est ajusté sur la tige filetée (122) et comprend une pluralité de filets femelles correspondant aux filets mâles (1221) de la tige filetée (122) et s'y engagent; et
un servomoteur (124) qui est monté sur le siège coulissant (123) et est couplé à la tige filetée (122) qu'il entraîne en rotation de manière à entraîner le siège coulissant (123) à effectuer un mouvement linéaire le long des deux rails (1211, 1212).

7. Manipulateur omnidirectionnel selon la revendication 6, dans lequel le servomoteur (124) est couplé à la tige filetée (122) qu'il entraîne en rotation au moyen d'un couplage (125) qui lui est couplé de manière à entraîner le siège coulissant (123) à effectuer le mouvement linéaire le long des deux rails (1211, 1212).

8. Manipulateur omnidirectionnel selon la revendication 1, dans lequel la troisième voie de guidage linéaire (13) comprend:
une base linéaire (131) qui comprend deux rails (1311, 1312) qui sont sensiblement parallèles l'un à l'autre;
une tige filetée (132) qui est montée à rotation sur la base linéaire (131) et comprend une pluralité de filets mâles (1321);
un siège coulissant (133) qui est ajusté sur la tige filetée (132) et comprend une pluralité de filets femelles correspondant aux filets mâles (1321) de la tige filetée (132) et s'y engagent et une pluralité de sièges de guidage (1331, 1332, 1333, 1334) correspondant respectivement aux deux rails (1311, 1321) de la base linéaire (131) de sorte que les sièges de guidage (1331, 1332, 1333, 1334) soient respectivement montés sur les deux rails (1311, 1312); et
un servomoteur (134) qui est fixé sur la base linéaire (131) et est couplé à la tige filetée (132) et l'entraîne en rotation de manière à entraîner le siège coulissant (133) à effectuer un mouvement linéaire le long des deux rails (1311, 1312) de la base linéaire (131).

9. Manipulateur omnidirectionnel selon la revendication 8, dans lequel le servomoteur (134) est couplé à la tige filetée (132) qu'il entraîne en rotation au moyen d'un couplage (135) qui lui est couplé de manière à entraîner le siège coulissant (133) à effectuer le mouvement linéaire le long des deux rails (1311, 1312) de la base linéaire (131).

10. Manipulateur omnidirectionnel selon la revendication 1, dans lequel le train d'engrenage angulaire (143) est un train d'engrenage à double essieu de sortie angulaire qui entraîne deux disques d'outil (141, 142) en rotation autour du premier axe de rotation (R1).
